# DEMANDE DE BREVET EUROPEEN

(11) **EP 4 717 451 A1**
(43) Date de publication de la demande: **01.04.2026**
(21) Numéro de dépôt: 25203783.3
(22) Date de dépôt: 22.09.2025
(51) Int. Cl.: B32B 3/26, B32B 3/28, B32B 5/02, B32B 27/12, B32B 27/32, B32B 27/34, F16L 59/02

(54) **SYSTÈME D'ISOLATION RÉFLECTIF AMÉLIORÉ**

(30) Priorité: 27.09.2024 FR 2410358
(71) Demandeur: Orion Financement, 75006 Paris (FR)
(72) Inventeur: THIERRY, Laurent, 11230 Chalabre (FR)
(74) Mandataire: Cabinet Beau de Loménie

(57) **Abrégé**

Système d'isolation thermique d'un bâtiment, comprenant un voile isolant, ledit voile isolant comprenant deux films externes (10, 20) solidarisés de manière à former des poches, ledit voile isolant comprenant en outre un film séparateur (60), comprenant un film séparateur primaire (70) et un film séparateur secondaire (80) partiellement solidarisés entre eux, de manière à présenter une alternance de portions solidarisées, et de portions non solidarisées entre les deux films élémentaires de manière à définir une pluralité de cavités étanches (62) ledit film séparateur (60) solidarisé au contact d'un film externe (10, 20) de la nappe, ledit film séparateur présentant une pluralité de cavités étanches, dans lequel chaque voile isolant comprend au moins un film interne (30), s'étendant entre les films externes de manière à subdiviser chaque poche en sous-poches, chaque sous-poche comprenant une nappe de matériau isolant (50), ladite nappe de matériau isolant (50) étant composé de fibres de matériau non tissé et présentant des évidements (52).

## Description

### Domaine Technique

La présente invention concerne les isolants thermiques réflecteurs.

### Technique antérieure

Les isolants thermiques réflecteurs sont des systèmes isolants utilisés dans des espaces contraints. Par opposition à des isolants conventionnels qui sont volumineux, ces isolants présentent un encombrement réduit, ce qui est avantageux par exemple en termes d'aménagement, typiquement pour des volumes localisés sous les toits.

Toutefois, les problématiques liées à de tels isolants impliquent qu'une amélioration de l'isolation nécessite une amélioration du produit, plutôt qu'une simple augmentation de l'épaisseur de l'isolant comme cela peut être réalisé avec des isolants conventionnels tels que de la laine de roche.

L'invention proposée vise ainsi à améliorer les propriétés d'isolation thermique de tels isolants réflecteurs.

### Exposé de l'invention

A cet effet, la présente invention propose un système d'isolation thermique d'un bâtiment, comprenant un voile isolant, ledit voile isolant comprenant deux films externes solidarisés de manière à former des poches,
ledit voile isolant comprenant en outre un film séparateur, comprenant un film séparateur primaire et un film séparateur secondaire partiellement solidarisés entre eux, de manière à présenter une alternance de portions solidarisées, et de portions non solidarisées entre les deux films élémentaires de manière à définir une pluralité de cavités étanches
ledit film séparateur solidarisé au contact d'un film externe de la nappe, ledit film séparateur présentant une pluralité de cavités étanches,
dans lequel chaque voile isolant comprend au moins un film interne, s'étendant entre les films externes de manière à subdiviser chaque poche en sous-poches, chaque sous-poche comprenant une nappe de matériau isolant, ladite nappe de matériau isolant étant composé de fibres de matériau non tissé et présentant des évidements.

Selon un exemple, le film séparateur primaire est solidarisé au contact d'un film externe de la nappe, le film séparateur secondaire est partiellement solidarisé au film séparateur primaire, le film séparateur primaire présente deux faces externes métallisées, le film séparateur secondaire présente une face d'accroche par laquelle il est partiellement solidarisé au film séparateur primaire, et une face externe métallisée.

Selon un exemple, le film séparateur primaire est un multicouche comprenant deux couches de polyéthylène séparées par une couche de polyamide, lesdites couches de polyéthylène étant chacune recouvertes d'une couche métallisée.

Selon un exemple, le film séparateur secondaire est un film multicouches comprenant :
- une couche de polyéthylène, recouverte d'une couche métallisée,
- une couche de polyamide,
- une couche d'accroche comprenant un mélange de polyéthylène et de copolymère éthylène acide acrylique, solidarisée partiellement au film séparateur primaire.

Selon un exemple, lequel ledit voile isolant comprend au moins deux films internes, de manière à diviser chaque poche en plusieurs sous-poches.

Selon un exemple, le film séparateur présente une densité de cavités étanches comprise entre 900 et 40 000 bulles/m².

Selon un exemple, la nappe de matériau isolant est composé de fibres textiles, présentant un taux d'ouverture compris entre 10% et 80%, ou encore entre 40% et 60%.

Selon un exemple, les fibres textiles sont solidarisées par thermofixation.

La présente invention concerne également un ensemble comprenant une pluralité de systèmes tels que définis précédemment, lesdits voiles isolant étant superposés.

Selon un exemple, lesdits voiles isolants sont perforés.

### Brève description des dessins

L'invention et ses avantages seront mieux compris à la lecture de la description détaillée faite ci-après de différents modes de réalisation de l'invention donnés à titre d'exemples non limitatifs.
[Fig. 1] La figure 1 présente schématiquement un exemple de produit pour la formation d'un système d'isolation thermique selon un aspect de l'invention
[Fig. 2] La figure 2 présente une vue d'un exemple de nappe de matériau isolant d'un produit selon l'invention.
[Fig. 3] La figure 3 présente une autre vue d'un exemple de nappe de matériau isolant d'un produit selon l'invention.
[Fig. 4] La figure 4 présente une vue schématique éclatée d'un exemple film séparateur primaire.
[Fig. 5] La figure 5 présente une vue schématique éclatée d'un exemple film séparateur secondaire.
[Fig. 6] La figure 6 présente une vue schématique d'un montage de système isolant mettant en œuvre un produit selon un aspect de l'invention.

Sur l'ensemble des figures, les éléments en commun sont repérés par des références numériques identiques.

### Description des modes de réalisation

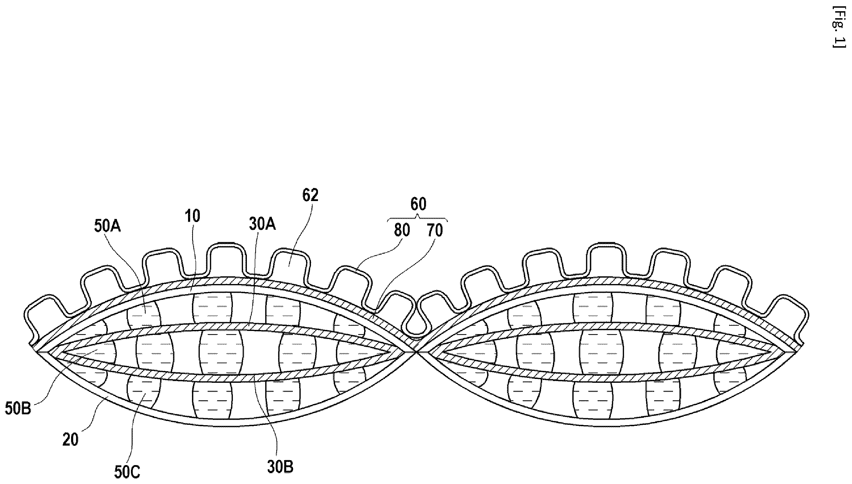

La figure 1 présente schématiquement un exemple de produit pour la formation d'un système d'isolation thermique selon un aspect de l'invention.

Le produit tel que proposé comprend un voile isolant comprenant deux films externes 10 et 20 solidarisés entre eux de manière à former des poches.

La figure 1 présente une vue partielle, dans laquelle seules deux poches sont illustrées. On comprend que cette figure n'est pas limitative, et que le voile isolant peut présenter un nombre quelconque de poches.

Les films externes 10 et 20 sont solidarisés de manière à former des poches, la solidarisation entre les deux films 10 et 20 est donc réalisée de manière à définir des portions au niveau desquelles les deux films 10 et 20 ne sont pas solidarisés, ces portions définissant les poches.

La solidarisation entre les deux films externes 10 et 20 peut être réalisée par couture, collage, soudage ou calandrage. Elle peut être réalisée de manière discrète ou continue, et selon des motifs en lignes droites, en courbes ou selon tout autre trajectoire ou motif adapté, par exemple selon un motif en losange.

La solidarisation peut être réalisée selon une direction longitudinale et/ou transversale, définissant ainsi des poches pouvant être délimitées sur tout ou partie de leur périphérie.

Le voile isolant tel que proposé comprend en outre au moins un film interne 30, interposé entre les deux films externes 10 et 20. Dans l'exemple illustré, le voile isolant comprend deux films internes, 30A et 30B. Ces films internes 30A et 30B viennent subdiviser chaque poche en sous-poches. Dans l'exemple illustré, les films externes 10 et 20 associés aux films internes 30 A et 30B définissent ainsi 3 sous-poches :
- une sous poche entre le film externe 10 et le film interne 30A,
- une sous poche entre les films internes 30A et 30B, et
- une sous poche entre le film interne 30B et le film externe 20.

On comprend que l'exemple illustré est purement illustratif et non limitatif. Le voile peut présenter un nombre quelconque de films internes 30, de manière à subdiviser les poches en un nombre souhaité de sous-poches. Le voile peut notamment présenter un film interne 30, deux films internes, ou trois films internes de manière à former respectivement 2, 3 ou 4 sous-poches.

Les différentes sous-poches comprennent chacune une nappe de matériau isolant 50. Dans l'exemple illustré sur la figure 1, on désigne par 50A, 5B et 50C les nappes de matériau isolant disposées dans les 3 sous poches.

La nappe de matériau isolant 50 est typiquement une nappe de mousse, typiquement en Polyéthylène. Cette nappe de mousse est typiquement pleine (ou non ajourée) lors de sa formation, et est ensuite typiquement ajourée par un procédé adapté. En variante, les ouvertures peuvent être formées dès la réalisation de la nappe.

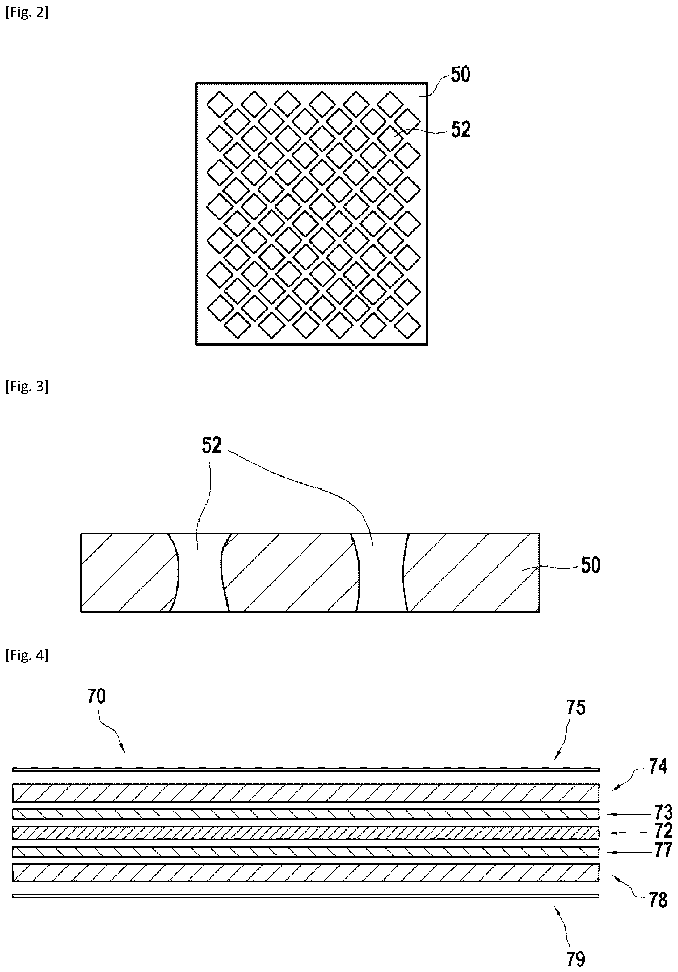

Les figures 2 et 3 présentent deux vues d'un exemple de nappe de matériau isolant 40 pouvant être employée. La figure 2 est une vue de dessus, tandis que la figure 3 est une vue schématique en coupe. La nappe de matériau isolant 50 telle qu'illustrée est une nappe ajourée ; elle présente une pluralité d'ouvertures 52 traversant ladite nappe. Dans l'exemple illustré, les ouvertures 52 ont une forme de losange ou de carré, et sont disposées en quinconce. Les ouvertures 52 peuvent présenter toute forme adaptée, et ce mode de réalisation illustré n'est pas limitatif.

Une telle structure ajourée est typiquement obtenue à partir d'une nappe de matériau isolant pleine, dans laquelle on réalise des découpes selon une première direction, puis que l'on étire selon une seconde direction perpendiculaire à la première direction et que l'on stabilise, par exemple par thermofixation.

En variante, la nappe de matériau isolant 50 est formée par une nappe de fibres non tissées enchevêtrées par exemple au moyen d'une carde ou de tout autre dispositif adapté. Les ouvertures 52 peuvent alors être réalisées dès la formation de la nappe, ou après la formation de la nappe par retrait de matière ou découpage.

L'utilisation d'une nappe de matériau isolant 50 est avantageuse en termes d'isolation. En effet, une fois la nappe de matériau isolant 50 enveloppée de part et d'autre, les zones ajourées forment des lames d'air ou bulles d'air qui présentent de meilleures propriétés que de la mousse ou des fibres en termes d'isolation thermique.

Selon un exemple, la nappe de matériau isolant 50 présente un taux d'ouverture compris entre 10% et 80%, ou encore entre 40% et 60%.

Le taux d'ouverture est défini comme la surface des évidements par rapport à la surface totale de la nappe de matériau isolant 50, en vue selon un plan défini par la direction longitudinale X-X et la direction transverse Y-Y de la nappe primaire 10.

Le produit tel que proposé comprend également au moins un film séparateur 60, chaque film séparateur 60 étant solidarisé à l'un des films externes 10 ou 20. Dans l'exemple illustré, le produit comprend un film séparateur 60 solidarisé au film externe 10.

Le film séparateur 60 comprend un film séparateur primaire 70 et un film séparateur secondaire 80. Le film séparateur primaire 70 est solidarisé à un film externe de la nappe, ici au film externe 10. Le film séparateur secondaire 80 est solidarisé partiellement au film séparateur primaire 70.

On distingue ainsi des portions solidarisées qui sont solidarisées au film séparateur primaire 70 par exemple par collage, thermoformage, soudage ou tout autre moyen adapté, et des portions non solidarisées qui ne sont quant à elles pas solidarisées au film séparateur primaire 70. Ces portions solidarisées et non solidarisées sont alternées, de sorte que les portions non solidarisées sont encadrées par des portions solidarisées étanches au gaz.

Les portions non solidarisées présentent typiquement une surface supérieure à leur projection sur le film séparateur primaire 70, de manière à définir un volume interne rempli d'un gaz et ainsi à former des bulles 62 ou cavités étanches.

Les bulles 62 sont typiquement remplies d'air ou d'un gaz inerte tel que par exemple l'Argon, le Xénon ou le Dioxyde de Carbone, ou encore leur mélange avec le Diazote. Ces différents gaz sont notamment avantageux par rapport à l'air du fait de leur conductivité thermique réduite, tout en demeurant inertes.

La figure 4 présente une vue schématique éclatée d'un exemple film séparateur primaire 70 qui est un film multicouche comprenant deux couches de Polyéthylène 74 et 78 (typiquement du haute densité) séparées par une couche de Polyamide 72, lesdites couches de Polyéthylène 74 et 78 étant chacune recouvertes d'une couche métallisée 75 et 79. Des couches d'accroche 73 et 77, typiquement réalisées en Polyéthylène modifié, sont typiquement interposées entre les couches de Polyéthylène 74 et 78 et la couche de Polyamide 72 pour favoriser l'accroche entre ces couches.

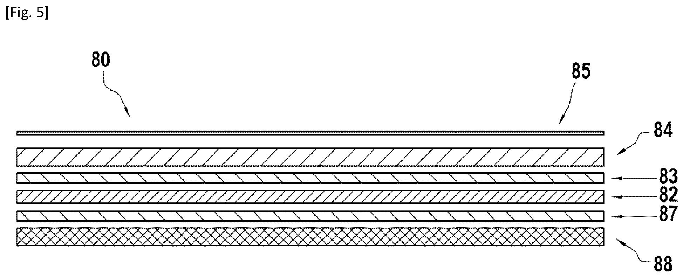

La figure 5 présente une vue schématique éclatée d'un exemple film séparateur secondaire 80 qui est un film multicouche comprenant :
- une couche de Polyéthylène 84, typiquement du Polyéthylène haute densité, recouverte d'une couche métallisée 85,
- une couche de polyamide 82,
- une couche 88 comprenant un mélange de polyéthylène et de copolymère éthylène acide acrylique, solidarisée partiellement au film séparateur primaire 40.

Des couches d'accroche 82 et 87, typiquement réalisées en Polyéthylène modifié, sont typiquement interposées entre la couche de Polyéthylène 84 et la couche de Polyamide 82, et entre la couche de Polyamide 82 et la couche 88 pour favoriser l'accroche entre ces couches.

On comprend que ces exemples sont uniquement illustratifs et non limitatifs. Les films séparateurs primaire 70 et secondaire 80 peuvent également être des films à base d'Éthylène-alcool vinylique (EVOH). Ils présentent alors typiquement une structure similaire aux structures de film séparateur primaire 70 et film séparateur secondaire 80 décrits précédemment, dans lesquels les couches de Polyamide (respectivement 72 et 82, qui sont des couches formant une barrière aux gaz) sont remplacées par une couche d'Éthylène-alcool vinylique.

Les différentes couches métallisées sont par exemple en aluminium. Les différentes couches métallisées présentent typiquement une épaisseur de l'ordre d'une centaine d'Angstrom.

Les bulles sont typiquement formées par aspiration après solidarisation partielle du film séparateur secondaire 80 sur le film séparateur primaire 70, par exemple au moyen d'un rouleau muni de cavités adaptés pour réaliser un effet d'aspiration. Un tel procédé réalise une déformation locale du film séparateur secondaire 80, ce qui vient typiquement dégrader la métallisation sur les portions non solidarisées. La présente d'une métallisation continue sur au moins une face du film séparateur primaire 70 assure un maintien de propriétés d'isolation élevées.

Le film séparateur 60 présente typiquement une densité de bulles comprise entre 900 et 40 000 bulles/m², ou encore entre 1000 et 20 000 bulles/m².

Le film séparateur 60 permet d'assurer un espacement dans le cas de la superposition de plusieurs produits, typiquement plusieurs produits tels que présentés, ou du produit tel que présenté avec tout autre produit. Un tel espacement assure la formation d'une lame d'air entre les produits, ce qui améliore les propriétés d'isolation thermique d'un ensemble composé de plusieurs produits superposés par rapport à un tel ensemble qui serait dépourvu d'un tel film séparateur.

Le produit tel que proposé est adapté pour être employé pour la réalisation de systèmes isolants de toiture. Il est ainsi interposé entre des chevrons et tasseaux de toiture, typiquement en combinaison avec d'autres produits identiques ou avec des produits complémentaires.

Dans une telle application, une problématique récurrente concerne les points de maintien de produits au niveau des chevrons. En effet, au niveau des chevrons, les produits isolant conventionnels sont compressés, ce qui dégrade les performances d'isolation thermique.

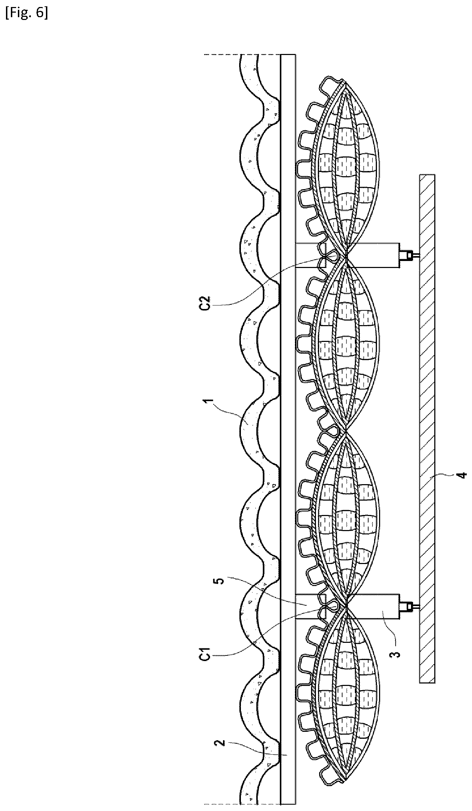

La figure 6 représente schématiquement un tel montage.

On repère ainsi sur cette figure un élément de couverture 1 tel que des tuiles 1 formant la toiture, des tasseaux supports 2 formant le support des tuiles, ainsi que des chevrons 3 et un parement de finition 4. Des tasseaux 5 sont interposés entre les tasseaux supports 2 et les chevrons 3.

Un système d'isolation est interposé entre les chevrons 3 et les tasseaux 5, ce système d'isolation 10 étant formé d'un produit tel que décrit précédemment. En variante, le système d'isolation peut comprendre plusieurs produits superposés, typiquement plusieurs produits tels que décrits précédemment.

Les portions d'appui entre les chevrons 3 et les tasseaux 5 définissent des portions de montage du système que l'on repère par les références C1 et C2. Des moyens de fixation tels que des clous ou tout autre élément adapté sont insérés de manière à relier les chevrons 3 aux tasseaux 5, et traversent donc le produit.

Comme décrit précédemment, ces portions de montage forment habituellement des portions ayant des performances thermiques dégradées et forment ainsi habituellement des ponts thermiques. L'invention permet de répondre à cette problématique ; la présence du film séparateur 60 assure un espacement minimum et la formation d'une lame d'air du fait de la présence des bulles 62.

Le produit tel que proposé présente ainsi des propriétés isolantes supérieures par rapport aux produits conventionnels, résultant de la combinaison du film séparateur 60, de la subdivision de la poche en sous poches par le(s) film(s) interne(s) 30, et par l'utilisation d'un matériau ajouré dans les sous poches.

De manière conventionnelle, les systèmes d'isolants réflectifs minces associent un produit étanche à un produit perméable, afin de permettre une évacuation de la condensation.

La réalisation d'un système associant plusieurs produits tels que proposés vient au contraire superposer deux produits similaires. Afin d'assurer une évacuation de la vapeur d'eau, le produit tel sur proposé présente typiquement des perforations traversantes.

La réalisation de telles perforations est typiquement réalisée avec des aiguilles à chaud ou à l'aide d'un laser. Les perforations réalisées présentent typiquement un diamètre compris entre 0,1 et 3 mm, une densité de l'ordre de 0,01% à 10% par m² de produit, typiquement selon une distribution régulière, en grille ou en quinconce. La réalisation de telles perforations assure ainsi une perméabilité à la vapeur d'eau. La demanderesse a cependant constaté que de manière surprenante, de telles perforations n'ont qu'un impact très faible sur les performances en termes d'isolation thermique.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

II est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Système d'isolation thermique d'un bâtiment, comprenant un voile isolant, ledit voile isolant comprenant deux films externes (10, 20) solidarisés de manière à former des poches,
ledit voile isolant comprenant en outre un film séparateur (60), comprenant un film séparateur primaire (70) et un film séparateur secondaire (80) partiellement solidarisés entre eux, de manière à présenter une alternance de portions solidarisées, et de portions non solidarisées entre les deux films élémentaires de manière à définir une pluralité de cavités étanches (62) ledit film séparateur (60) solidarisé au contact d'un film externe (10, 20) de la nappe, ledit film séparateur présentant une pluralité de cavités étanches,
dans lequel le voile isolant comprend au moins un film interne (30), s'étendant entre les films externes de manière à subdiviser chaque poche en sous-poches,
chaque sous-poche comprenant une nappe de matériau isolant (50), ladite nappe de matériau isolant (50) étant composé de fibres de matériau non tissé et présentant des évidements (52).

2. Système selon la revendication 1, dans lequel :
le film séparateur primaire (70) est solidarisé au contact d'un film externe (10, 20) de la nappe,
le film séparateur secondaire (80) est partiellement solidarisé au film séparateur primaire (70),
le film séparateur primaire (70) présente deux faces externes métallisées (75, 79) ,
le film séparateur secondaire (80) présente une face d'accroche (88) par laquelle il est partiellement solidarisé au film séparateur primaire (70), et une face externe métallisée (85).

3. Système selon la revendication 2, dans lequel le film séparateur primaire (70) est un multicouche comprenant deux couches de polyéthylène (74, 78) séparées par une couche de polyamide (72), lesdites couches de polyéthylène (74, 78) étant chacune recouvertes d'une couche métallisée (75, 79).

4. Système selon l'une des revendications 2 ou 3, dans lequel le film séparateur secondaire (80) est un film multicouches comprenant :
- une couche de polyéthylène (84), recouverte d'une couche métallisée (85),
- une couche de polyamide (82),
- une couche d'accroche (88) comprenant un mélange de polyéthylène et de copolymère éthylène acide acrylique, solidarisée partiellement au film séparateur primaire (70).

5. Système selon l'une des revendications 1 à 4, dans lequel ledit voile isolant comprend au moins deux films internes (30a, 30b), de manière à diviser chaque poche en plusieurs sous-poches.

6. Système selon l'une des revendications 1 à 5, dans lequel le film séparateur présente une densité de cavités étanches (62) comprise entre 900 et 40 000 bulles/m².

7. Système selon l'une des revendications précédentes, dans lequel la nappe de matériau isolant est composé de fibres textiles, présentant un taux d'ouverture compris entre 10% et 80%, ou encore entre 40% et 60%.

8. Système selon la revendication 7, dans lequel les fibres textiles sont solidarisées par thermofixation.

9. Ensemble comprenant une pluralité de systèmes selon l'une des revendications précédentes, lesdits voiles isolant étant superposés.

10. Ensemble selon la revendication 9, dans lequel lesdits voiles isolants sont perforés.
